# EUROPÄISCHE PATENTSCHRIFT

(11) **EP 1 398 935 B1**
(45) Veröffentlichungstag und Bekanntmachung des Hinweises auf die Patenterteilung: **30.12.2015**
(21) Anmeldenummer: 03017486.6
(22) Anmeldetag: 01.08.2003
(51) Int. Cl.: H04L 29/06, H04M 7/00, H04Q 3/00, H04L 29/08

(54) **Verfahren zum Aufbau einer Nutzdatenverbindung zwischen Endpunkten in einer VoIP-Anordnung**
Method for establishing a data connection between endpoints in a VoIP arrangement
Procédé pour établir une connexion des données entre des points terminaux dans un système VoIP

(30) Priorität: 05.09.2002 DE 10241179
(43) Veröffentlichungstag der Anmeldung: 17.03.2004
(73) Patentinhaber: Unify GmbH & Co. KG, 81379 München (DE)
(72) Erfinder: Abel, Ulrich, 45329 Essen (DE); Bozionek, Bruno, 33178 Borchen (DE); Roth, Roland, 45886 Gelsenkirchen (DE); Zimmermann, Rainer, 33106 Paderborn (DE)
(74) Vertreter: Fritzsche, Thomas

(56) Entgegenhaltungen:
- EP-A- 1 091 551
- WO-A-01/11838
- DE-A- 10 040 444

## Beschreibung

Die Erfindung betrifft ein Verfahren zum Aufbau einer Nutzdatenverbindung zwischen Endpunkten in einer VoIP-Anordnung gemäß des Oberbegriffs des Patentanspruchs 1.

Kommunikations-Netzwerke, deren Komponenten paketvermittelt miteinander kommunizieren, treten in verstärktem Maße an die Stelle leitungsvermittelnder Kommunikations-Netze. Solche Netzwerke werden in der Literatur auch als Voice-over-IP (kurz: VoIP) -Netzwerke bezeichnet, wenn zum Austausch der akustischen Informationen in Form von Daten das Internet-Protokoll (IP) verwendet wird.

Während in der leitungsvermittelten Telephonie als Endgeräte meistens Telefone eingesetzt werden, spricht man in VoIP-Kommunikations-Netzwerken allgemein von Endpunkten, weil neben den Sprachendgeräten, also den Telefonen, auch andere Geräte eingesetzt werden können, beispielsweise Multimedia-PCs.

Die Endpunkte in VoIP-Kommunikations-Netzwerken tauschen im aktiven Betrieb miteinander Daten aus. Dabei wird zwischen Steuerungsdaten und Nutzdaten unterschieden. Während die Nutzdaten im Falle der Sprach-Endgeräte aus dem digitalisierten Sprachsignal bestehen, werden die Steuerungsdaten benutzt, um Verbindungen zwischen Endpunkten zu initiieren und zu steuern. Die Leistungsmerkmale, die auch bereits aus der leitungsvermittelnden Telephonie bekannt sind, wie z. B. Wählen, Rückfragen, Makeln, die Displayanzeigen und der Verbindungsabbau, werden in VoIP-Kommunikations-Netzwerken mit Hilfe der Steuerungsdaten realisiert.

In der "klassischen" leitungsvermittelten Telephonie sind die Endgeräte nicht direkt miteinander verbunden, sondern an einer zentralen Vermittlungsinstanz, also an einer Kommunikationsanlage, angeschlossen. Die von den Endgeräten versendeten Steuerungsdaten werden von der Kommunikationsanlage ausgewertet und die Nutzdaten, also die digitalisierten Sprachinformationen, werden von der Kommunikationsanlage zum jeweiligen Endgerät geleitet.

Die Druckschrift EP 1 091 551 Coen et al. "Verfahren zum Betreiben einer Vermittlungseinrichtung unter Nutzung verschiedener Signalisierungsprotokolle" zeigt in einer Kommunikationsanordnung eine Kommunikationsanlage, an der VoIP-Endpunkte angeschlossen sind. Zwischen jedem dieser Endpunkte und der Kommunikationsanlage ist jeweils eine Signalisierungsverbindung und eine Nutzdatenverbindung etabliert, wobei über die Signalisierungsverbindung jeweils Steuerungsdaten zwischen der Kommunikationsanlage und dem Endpunkt ausgetauscht werden, und wobei entsprechend über die Nutzdatenverbindung jeweils die Nutzdaten, also das digitalisierte sprachsignal, zwischen dem jeweiligen Endpunkt und der Kommunikationsanlage ausgetauscht werden. Zusätzlich zu der ersten Signalisierungsverbindung, über die Steuerungsdaten gemäß eines standardisierten VoIP-Signalisierungsprotokolles (H.323/H.225/H.245) ausgetauscht werden, wird zwischen den Endpunkten und der Kommunikationsanlage noch jeweils eine zweite Signalisierungsverbindung zur Übertragung weiterer Steuerungsdaten gemäß eines proprietären Kommunikationsprotokolls etabliert. Über ein Koppelfeld der Kommunikationsanlage werden die Nutzdaten zwischen den Endpunkten ausgetauscht.

Bei den VoIP-Kommunikations-Netzwerken dagegen werden die Nutzdaten auf direktem Wege zwischen den Endpunkten ausgetauscht, während die Steuerungsdaten in den meisten Fällen über eine zentrale Instanz ausgewertet und weitergeleitet werden. Diese zentrale Instanz ist in diesen Netzwerken beispielsweise ein sog. Gatekeeper, der unter anderem die Umsetzung zwischen Rufnummern und Netzwerkadressen vornimmt und so den Verbindungsaufbau zwischen zwei Endpunkten steuert.

Beim Austausch von Steuerungs- und Nutzdaten müssen in Kommunikations-Netzwerken von allen Endgeräten, Endpunkten und sonstigen Netzwerkkomponenten Konventionen (Normen) eingehalten werden, die in Protokollen bzw. Protokoll-Familien festgelegt sind. In leitungsvermittelten Kommunikations-Netzwerken wie dem ISDN ist das beispielsweise das Euro-ISDN-Protokoll E-DSS1 oder das firmenspezifische Protokoll CorNet-TS, während in den VoIP-Kommunikations-Netzwerken das Protokoll ITU-T H. 323 weit verbreitet ist. In den Kommunikations-Netzwerken können dabei immer nur solche Funktionen und Leistungsmerkmale realisiert werden, die in dem verwendeten Protokoll bzw. der verwendeten Protokoll-Familie definiert sind. Dabei ist die Einhaltung der in den Protokollen vereinbarten Konventionen wichtig, damit Komponenten unterschiedlicher Hersteller verwendet und auch Netzwerke unterschiedlicher Betreiber oder unterschiedlicher Nationalstaaten miteinander verbunden werden können.

Während der Teil der Protokollfamilie H.323, der die Konvention zur Übertragung der Nutzdaten festlegt, in den meisten Fällen den Anforderungen der heute eingesetzten Endpunkte entspricht, genügen die H.323-Protokollelemente zur Verbindungssteuerung (Signalisierung) oftmals nicht (mehr) den Anforderungen. Mit diesen Protokollelementen lassen sich beispielsweise nicht alle Funktionen und Leistungsmerkmale, die aus den oben genannten Protokollen der leitungsvermittelnden Telephonie bekannt sind, realisieren. Aus diesem Grund wird zwischen den Endpunkten und dem Gatekeeper (bzw. den Gatekeepern) in VoIP-Kommunikations-Netzwerken nicht nur ein Steuerungsdaten-Kanal gemäß dem H.323-Protokoll aufgebaut, sondern in Ergänzung dazu parallel ein weiterer Steuerungsdaten-Kanal, der zumeist nach einem firmenspezifischen Protokoll arbeitet und zur Realisierung der Funktionen und Leistungsmerkmale benötigt wird, die in dem Protokoll H.323 nicht definiert sind. Das betrifft vor allem Funktionen und Komfortfunktionen, die zum Verbindungsaufbau mit modernen Endpunkten benötigt werden und die im Standard H.323 nicht unterstützt werden , wie zum Beispiel Kurzwahltasten, umfangreiche Displayanzeigen und spezielle Ruf- und Klingeltöne. Deshalb wird beim Verbindungsaufbau, der von einem Endpunkt aus initiiert wird, zunächst eine Steuerungsdaten-Verbindung gemäß einem firmenspezifischen Protokoll zwischen dem rufenden Endpunkt und der zugeordneten VoIP-Kommunikationsanhage mit der Gatekeeper-Funktionalität aufgebaut, und anschließend wird von dieser VoIP-Kommunikationsanlage aus ein Steuerdaten-Kanal gemäß des Protokolls H.323 zum rufenden Endpunkt hin aufgebaut.

An dem bekannten Verfahren zum Aufbau einer Verbindung in VoIP-Kommunikations-Netzwerken hat sich als nachteilig erwiesen, dass in Folge des Aufbaus der H.323-Verbindung von der VoIP-Kommunikationsanlage zum Endpunkt hin die Verwendung von Standard-H.323-konformen Endpunkten, die den Verbindungsaufbau in umgekehrter Richtung vornehmen, nicht möglich ist.

Aufgabe der Erfindung ist es, in VoIP-Kommunikations-Netzwerken den standard-konformen Betrieb von Endpunkten ohne Begrenzung von Funktionen und Leistungsmerkmalen zu gewährleisten.

Die Lösung dieser Aufgabe ist durch die im Anspruch 1 angegebenen Merkmale gegeben. Durch die Merkmale der Unteransprüche ist die Erfindung in vorteilhafter Weise weiter ausgestaltet.

Die Lösung dieser Aufgabe sieht vor, dass zumindest die zweite Signalisierungsverbindung durch den rufenden Endpunkt initiiert wird und die über die erste und parallel über die zweite Signalisierungsverbindung übermittelten Informationen der Endpunkte jeweils zusammengefasst werden. Dabei wird die Nutzdatenverbindung direkt zwischen den Endpunkten (HFA A, HFA B) über ein paketvermittelndes Netzwerk (LAN) aufgebaut. Durch den Einsatz eines standardisierten Protokolls für die zweite Signalisierungsverbindung ist es möglich, Standard (z.B. H.323) -Endpunkte einzusetzen. Die Leistungsmerkmale "Fast Connect Procedure", "H245 Tunnelling" und "Parallel H245 Tunnelling" des H.323-Standards werden so unterstützt und durch die Synchronisierung der über beide Signalisierungsverbindungen übertragenen Informationen kann das CallProcessing diese Information so verarbeiten, als wären sie über eine einzige Verbindung übertragen worden.

Wenn die Nutzdatenverbindung etabliert wird, nachdem die Signalisierungsverbindung zwischen den Endpunkten aufgebaut ist und noch bevor der gerufene Endpunkt den Ruf annimmt, wird die Wartezeit nach Rufannahme verringert.

Das CallProcessing kann in analoger Weise zu leitungsvermittelten Kommunikations-Netzwerken auf die gesamten Steuerdaten zugreifen, indem die zusammengefassten Informationen von der zumindest einen Vermittlungsinstanz in der Weise behandelt werden, als ob sie über eine einzige Signalisierungsverbindung übermittelt worden sind.

wenn in Fällen, in denen zwischen den Endpunkten mehrere Vermittlunginstanzen angeordnet sind, die zusammengefassten Informationen innerhalb einer Signalisierungsverbindung zwi-schen den Vermittlungsinstanzen übermittelt werden, können diese leitungsvermittelt miteinander kommunizieren und müssen nicht das Protokoll der VoIP-Anordnung unterstützen.

Wenn das zweite Protokoll das ITU-H.323 oder das IETF-SIP-Protokoll ist, können in der VoIP-Anordnung beliebige zu diesen Protokollen konforme Endpunkte und Komponenten auch anderer Hersteller eingesetzt werden.

Wenn das erste Protokoll ein proprietäres Protokoll ist, sind alle Funktionen und Leistungsmerkmale, die vom jeweiligen Hersteller der Vermittlungsinstanz und der Endpunkte vorgesehen sind, in der VoIP-Anordnung nutzbar.

Zweckmäßigerweise werden mit Hilfe des ersten Protokolls diejenigen Informationen übertragen, die im zweiten Protokoll nicht definiert sind, so dass in der VoIP-Anordnung Funktionen und Leistungsmerkmale verwendet werden können, die im zweiten Protokoll nicht vorgesehen sind.

Ein Ausführungsbeispiel eines erfindungsgemäßen Verfahrens zum Aufbau einer Nutzdatenverbindung zwischen Endpunkten in einer VoIP-Anordnung wird nachfolgend anhand der Zeichnungen beschrieben.

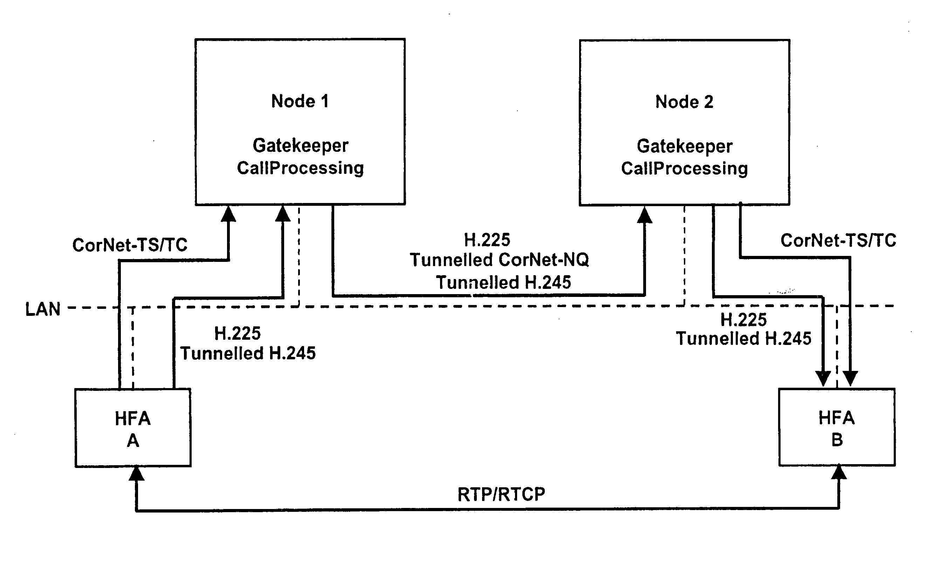

Die einzige Figur zeigt ein paketvermittelndes Netzwerk LAN, in dem sind zwei Kommunikationsknoten Node 1, Node 2 angeordnet sind. Bei den Kommunikationsknoten Node 1, Node 2 handelt es sich um Systeme zur Sprachdatenübertragung in Datennetzen, sogenannte VoIP-Systeme (VoIP = Voice over IP; IP = Internet-Protokoll). Dabei ist jeder der Kommunikationsknoten Node 1, Node 2 aus einem Gatekeeper und einer Steuerungseinheit, dem sogenannten CallProcessing, gebildet. Weiter sind im Netzwerk LAN als Kommunikationsteilnehmer die Endpunkte HFA A, HFA B angeordnet, wobei der Endpunkt HFA A ein am Kommunikationsknoten Node 1 angemeldetes und der Endpunkt HFA B ein an dem Kommunikationsknoten Node 2 angemeldetes Telefonie-Endgerät mit einer LAN-Schnittstelle ist. Die in der Figur dargestellten Pfeile stellen logische Verbindungskanäle dar. Dabei gibt die Pfeilrichtung diejenige Übertragungsrichtung an, in der im folgenden Beispiel der jeweilige Übertragungskanal erstmalig benutzt wird.

Die Endpunkte HFA A, HFA B sind VoIP-Endgeräte ("IP-Telefone"), die grundsätzlich die Nutzdaten, also die Sprachdaten, nach dem Protokoll ITU-T H.323 und den in dieser Norm definierten Unterstandards übertragen. Es gibt jedoch viele Leistungsmerkmale, die zwar aus der leitungsvermittelnden Telephonie bekannt sind, aber in der Protokollfamilie H.323 nicht definiert sind. Solche Leistungsmerkmale werden in der leitungsvermittelnden Telephonie der privaten Kommunikationsnetze im D-Kanal einer ISDN-Verbindung ebenfalls mit Hilfe genormter Protokolle abgebildet, beispielsweise mit dem Euro-ISDN-Protokoll EDSS-1 oder mit firmenspezifischen Protokollen wie dem CorNet-TS. In den VoIP-Kommunikationsnetzen werden diese Leistungsmerkmale in jeweils einer separaten Datenverbindung zwischen den Endpunkten HFA A, HFA B und den diesen zugeordneten Kommunikationsknoten Node 1, Node 2 übertragen. Dazu werden die aus den IDSN-Kommunikationssystemen bekannten Meldungen des Protokolls CorNet-TS in Datenpakete verpackt, die gemäß des im Netzwerk LAN verwendeten Internet-Protokolls transportiert werden. In diesem Fall bezeichnet man den Übertragungsstandard für die so transportierten CorNet-TS-Daten als CorNet-TS/TC. Selbstverständlich kann auch jedes andere Protokoll, welches die geforderten Leistungsmerkmale unterstützt, zur Übertragung der Meldungen zwischen den Endpunkten HFA A, HFA B und den Kommunikationsknoten Node 1, Node 2 verwendet werden. Gleichfalls kann anstelle des genannten standardisierten Übertragungsprotokolls H.323 auch ein anderes Protokoll verwendet werden, welches die Übertragung von Sprachdaten in Datennetzes unterstützt, beispielsweise das IETF-SIP (IETF=Internet Engineering Task-Force; SIP=Session Initiation Protocol).

Im Folgenden ist der Aufbau einer Sprachverbindung zwischen den Endpunkten HFA A und HFA B beschrieben. Dabei erfolgt der Verbindungsaufbau ausgehend vom Endpunkt HFA A über den Kommunikationsknoten Node 1 zum Kommunikationsknoten Node 2 und von dort aus zum Endpunkt HFA B. Die Nutzdaten, also die Datenpakete mit den Sprachdaten, werden nach dem Aufbau der Verbindung direkt zwischen den Endpunkten HFA A und HFA B über das paketvermittelnde Netzwerk LAN übertragen.

Nach der Initialisierung beim Anschluss eines Endpunktes HFA A, HFA B am Netzwerk wird zwischen jedem Endpunkt HFA A, HFA B und dem jeweils zugeordneten Kommunikationsknoten Node 1, Node 2 eine CorNet-TS/TC-Verbindung aufgebaut. Diese ist dann etabliert, um beispielsweise jeweils Displaymeldungen (Datum, Uhrzeit) zu aktualisieren oder Signalleuchten (z.B. von Direktruftasten oder Mailbox-Funktionen) zu steuern.

Der Benutzer des Endpunktes HFA A, der als Telefonie-Endgerät (IP-Telefon) ausgeführt ist, hebt den Hörer des Apparates ab, um ein Gespräch zu beginnen. Die Meldung, dass der Hörer abgehoben wurde, wird vom Endpunkt HFA A über die Verbindung CorNet-TS/TC zum Kommunikationsknoten Node 1 übermittelt. Über den Rückkanal der Verbindung CorNet-TS/TC sendet der Kommunikationsknoten Node 1 zum Endpunkt HFA A den Befehl, den Wählton auf den Hörer (bzw. den Lautsprecher) aufzuschalten. Nun wählt der Benutzer die Rufnummer des Endpunkts HFA B, wobei jeder einzelne Tastendruck als Meldung über die Verbindung CorNet-TS/TC zum Kommunikationsknoten Node 1 übertragen wird.

Nach Abschluss der Wahl sendet der Kommunikationsknoten Node 1 dem Endpunkt HFA A den Befehl, zum Kommunikationsknoten Node 1 hin eine Verbindung nach dem Protokoll H.323 aufzubauen. Dazu wird vom Endpunkt HFA A zunächst ein Steuerungskanal nach dem H.323-Unterstandard H.225 aufgebaut, in dem Signalisierungsdaten übertragen werden. In dem Datenkanal nach H.225 werden dabei auch Datenfelder mit Daten belegt, die nicht standardkonform sind. Solche Daten werden zusammen mit den protokollgemäßen Daten zum Endpunkt der H.225-Verbindung übertragen. Im vorliegenden Beispiel werden in solchen Datenfeldern Protokollelemente des H.323-Unterstandards H.245 übermittelt, in denen beispielsweise der vom Endpunkt HFA A verwendete Audio-Codec beschrieben ist. Diese Übertragung protokollfremder Elemente in solchen speziellen Datenfeldern, sog. Daten-Containern, nennt sich "Tunneln".

Die Schnittstellen der Kommunikationsknoten Node 1, Node 2, an denen die Daten der Verbindungen CorNet-TS/TC und H.225 mit den jeweils zugeordneten Endpunkten HFA A, HFA B ausgetauscht werden, sind so ausgeführt, dass die auf den Verbindungen CorNet-TS/TC und H.225 getrennt zu den Kommunikationsknoten Node 1, Node 2 übertragenen Informationen zusammengefasst und synchronisiert an das CallProcessing weitergeben werden. Umgekehrt trennt diese Schnittstelle die Informationen der Kommunikationsknoten Node 1, Node 2 derart auf, dass die zum Protokoll CorNet-TS gehörenden Informationen über die Verbindung CorNet-TS/TC an die Endpunkte HFA A, HFA B übermittelt werden, während der Teil der Informationen, der im Protokoll H.225 definiert ist, über die H.225-Verbindung übertragen wird. Dazu gehören auch die Informationen gemäß des Protokolls H.245, welche "getunnelt" über das Protokoll H.225 übertragbar sind. Durch die Synchronisation der beiden Datenströme sind auch die aus dem H.323-Protokoll stammenden Signalisierungsinformationen gemäß H.225-Protokoll durch das CallProcessing der Kommunikationsknoten Node 1, Node 2 auswertbar.

Der beschriebene Datenkanal nach H.225 wird vom Kommunikationsknoten Node 1 aus zum Kommunikationsknoten Node 2 weitergeschaltet und von dort aus zum Endpunkt HFA B. In dieser Verbindung gemäß Protokoll H.225 sind nicht nur die Informationen nach dem Protokoll H.245 gemäß des vorbeschriebenen Verfahrens getunnelt, sondern auch darüber hinausgehende Vernetzungsinformationen, die auch aus der Vernetzung leitungsvermittelnder Kommunikationsknoten bekannt sind. Ein aus der leitungsvermittelten Telephonie bekanntes standardisiertes Vernetzungsprotokoll ist das Protokoll ECMA/ISO-QSIG.; hier wird das proprietäre Protokoll CorNet-NQ eingesetzt. Durch die "Tunnelung" der im Protokoll CorNet-NQ abgebildeten Vernetzungs-Informationen können die zwischen den Kommunikationsknoten Node 1, Node 2 auszutauschenden Daten über jedes H.323-protokoll-konforme Netzwerk übertragen werden.

Die im Rahmen der Verbindung nach Protokoll H.225 übertragenen Informationen werden vom Kommunikationsknoten Node 2 ausgewertet, wo jetzt also alle relevanten und bislang über die Verbindungen H.225 und CorNet-TS/TC übermittelten Informationen über die vom Endpunkt HFA A initiierte Sprachverbindung vorliegen. Das sind insbesondere die Rufnummer und gegebenenfalls auch der Name des Endpunktes HFA A, die Rufnummer der gerufenen Endpunktes HFA B, die Beschreibung des von dem Endpunkt HFA A verwendeten Audio-Codecs, und die Beschreibung des Datenkanals RTP/RTCP, auf dem der Endpunkt HFA A die Nutzdaten, also die Sprachdaten, zu der gewünschten Verbindung vom Endpunkt HFA B empfangen möchte.

Der Kommunikationsknoten Node 2 baut nun eine Verbindung nach Protokoll H.225 zum Endpunkt HFA B auf, um die Informationen über den gewünschten Verbindungsaufbau gemäß Protokoll H.225 und die getunnelten Informationen gemäß H.245 zu übertragen. Diese Informationen sind in der Protokollfamilie H.323 definiert. Gleichzeitig nutzt der Kommunikationsknoten Node 2 die CorNet-TS/TC-Verbindung zum Endpunkt HFA B, um die zusätzlichen, nicht im Protokoll H.323 definierten Informationen zum Endpunkt HFA B zu übertragen. Das sind beispielsweise die Informationen über die Display-Meldung mit dem Namen des rufenden Endpunktes HFA A.

Anhand der über den Kanal H.225 übermittelten Informationen über den Verbindungswunsch übermittelt nun der Endpunkt HFA B über die Verbindung H.225 eine Bestätigungsmeldung, die ebenfalls die getunnelten Informationen gemäß Protokoll H.245 sowie die Daten über denjenigen Nutzkanal RTP/RTCP umfasst, auf dem der Endpunkt HFA B die Sprachdaten des Endpunktes HFA A empfangen kann. Diese Meldung verläuft vom Endpunkt HFA B über den Kommunikationsknoten Node 2 und den Kommunikationsknoten Node 1 zum Endpunkt HFA A. Der Kommunikationsknoten Node 2 übermittelt nun über die Verbindung CorNet-TS/TC an den Endpunkt HFA B den Befehl, den eingehenden Anruf mit Hilfe des Geräteweckers zu signalisieren, während der Kommunikationsknoten Node 1 über die CorNet-TS/TC-Verbindung zum Endpunkt HFA A hin den Befehl übermittelt, den Rufton auf den Hörer (bzw. den Lautsprecher) des Endpunktes HFA A aufzuschalten.

Mit Eingang der von Endpunkt HFA A übermittelten Meldungen im Datenkanal gemäß Protokoll H.225 beim Endpunkt HFA B und mit dem Empfang der entsprechenden Rückmeldungen im Endpunkt HFA A sind die beiden zur Übertragung der Sprachdaten notwendigen Nutzdatenkanäle RTP/RTCP etabliert. Zum vorliegenden Zeitpunkt werden allerdings noch keine Nutzdaten-Pakete übertragen, weil der Teilnehmer am Endpunkt HFA B den Ruf noch nicht entgegengenommen hat. Das Verfahren, die Nutzdatenkanäle vor der Annahme des Rufes durch den gerufenen Teilnehmer zu etablieren, ist im H.323-Protokoll als "FastConnect" vorgesehen.

Sobald der Teilnehmer am Endpunkt HFA B den Hörer abhebt, hat das zur Folge, dass dieses Ereignis vom Endpunkt HFA B über die Verbindung CorNet-TS/TC zum Kommunikationsknoten Node 2 übermittelt wird. Der Kommunikationsknoten Node 2 übermittelt nun ebenfalls über die Verbindung CorNet-TS/TC den Befehl zum Endpunkt HFA B, dass der Verbindungsaufbau zu vervollständigen ist. Nach Empfang dieses Befehles sendet der Endpunkt HFA B die entsprechende Meldung "Connect" über die Verbindung H.225 zum Kommunikationsknoten Node 2, von diesem zum Kommunikationsknoten Node 1 und von dort aus zum Endpunkt HFA A. Diese Meldung wird auch von beiden Kommunikationsknoten Node 1, Node 2 ausgewertet, die den ihnen jeweils zugeordneten Endpunkten HFA A bzw. HFA B über die jeweilige CorNet-TS/TC-Verbindung den Befehl übermittelt, in den Gesprächsmodus überzuwechseln. Beide Endpunkte HFA A, HFA B schalten nun die Mikrofone in den Hörern ein und beginnen mit der Übertragung der Sprachdaten über die bereits etablierten Verbindungen RTP/RTCP.

## Patentansprüche

1. Verfahren zum Aufbau einer Nutzdatenverbindung (RTP/RTCP) zwischen einem rufenden Endpunkt (HFA A) und einem gerufenen Endpunkt (HFA B) in einer VoIP-Anordnung mit zumindest einer Vermittlungsinstanz (Node 1, Node 2),
wobei zwischen jedem Endpunkt (HFA A, HFA B) und der zumindest einen Vermittlungsinstanz (Node 1, Node 2) zum Austausch von Informationen eine erste Signalisierungsverbindung (CorNet-TS/TC) gemäß einem ersten Protokoll und eine zweite Signalisierungsverbindung (H.225 Tunnelled H.245) gemäß einem standardisierten zweiten Protokoll aufgebaut wird,
wobei das erste Protokoll ein proprietäres Protokoll ist, wobei mit Hilfe des ersten Protokolls diejenigen Informationen übertragen werden, die im zweiten Protokoll nicht definiert sind,
wobei die Nutzdatenverbindung(RTP/RTCP) anhand der gemäß des zweiten Protokolls ausgetauschten Informationen aufgebaut wird, wobei zumindest die zweite Signalisierungsverbindung (H.225 Tunnelled H.245)durch den rufenden Endpunkt (HFA A) initiiert wird,
wobei die über die erste und parallel über die zweite Signalisierungsverbindung übermittelten Informationen der Endpunkte (HFA A, HFA B) jeweils zusammengefasst werden und
wobei die Nutzdatenverbindung (RTP/RTCP) direkt zwischen den Endpunkten (HFA A, HFA B) über ein paketvermittelndes Netzwerk (LAN) aufgebaut wird.

2. Verfahren nach Anspruch 1,
**dadurch gekennzeichnet,**
**dass** die Nutzdatenverbindung (RTP/RTCP) etabliert wird, nachdem die Signalisierungsverbindung zwischen den Endpunkten (HFA A, HFA B) aufgebaut ist und noch bevor der gerufene Endpunkt (HFA B) den Ruf annimmt.

3. Verfahren nach einem der vorhergehenden Ansprüche,
**dadurch gekennzeichnet,**
**dass** die zusammengefassten Informationen von der zumindest einen Vermittlungsinstanz (Node 1, Node 2) in der Weise behandelt werden, als ob sie über eine einzige Signalisierungsverbindung übermittelt worden sind.

4. Verfahren nach einem der vorhergehenden Ansprüche,
**dadurch gekennzeichnet,**
**dass** in Fällen, in denen zwischen den Endpunkten (HFA A, HFA B) mehrere Vermittlungsinstanzen (Node 1, Node 2) angeordnet sind, die zusammengefassten Informationen innerhalb einer Signalisierungsverbindung zwischen den Vermittlungsinstanzen (Node 1, Node 2) übermittelt werden.

5. Verfahren nach einem der vorhergehenden Ansprüche,
**dadurch gekennzeichnet,**
**dass** zweite Protokoll das ITU-H.323 oder das IETF-SIP-Protokoll ist.

## Claims

1. Method for establishing a data connection (RTP/RTCP) between a calling endpoint (HFA A) and a called endpoint (HFA B) in a VoIP arrangement with at least one switching entity (node 1, node 2),
wherein, for the exchange of information, between each endpoint (HFA A, HFA B) and the at least one switching entity (node 1, node 2), a first signaling connection (CorNet-TS/TC) is established according to a first protocol and a second signaling connection (H.225 Tunnelled H.245) is established according to a standardized second protocol,
wherein the first protocol is a proprietary protocol, wherein the information that is not defined in the second protocol is transmitted using the first protocol,
wherein the data connection (RTP/RTCP) is established based on information exchanged according to the second protocol, wherein at least the second signaling connection (H.225 Tunnelled H.245) is initiated by the calling endpoint (HFA A),
wherein the information of the endpoints (HFA A, HFA B) transmitted via the first signaling connection and in parallel via the second signaling connection is combined in each case, and
wherein the data connection (RTP/RTCP) is established directly between the endpoints (HFA A, HFA B) via a packet transmission network (LAN).

2. Method according to Claim 1,
**characterized in that** the data connection (RTP/RTCP) is established after the signaling connection between the endpoints (HFA A, HFA B) has been established and before the called endpoint (HFA B) accepts the call.

3. Method according to any one of the preceding claims,
**characterized in that**
the combined information from the at least one switching entity (node 1, node 2) is processed as if it had been transmitted via a single signaling connection.

4. Method according to any one of the preceding claims,
**characterized in that**,
in cases in which several switching entities (node 1, node 2) are arranged between the endpoints (HFA A, HFA B), the combined information is transmitted within a signaling connection between the switching entities (node 1, node 2).

5. Method according to any one of the preceding claims,
**characterized in that**
the second protocol is the ITU-H.323 or the IETF-SIP protocol.

## Revendications

1. Procédé d'établissement d'une connexion de données utiles (RTP/RTCP) entre un point terminal appelant (HFA A) et un point terminal appelé (HFA B) dans un système VoIP avec au moins une instance de commutation (noeud 1, noeud 2),
entre chaque point terminal (HFA A, HFA B) et la ou les instances de commutation (noeud 1, noeud 2) sont établies pour l'échange d'informations une première liaison de signalisation (CorNet-TS/TC) conformément à un premier protocole et une seconde liaison de signalisation (H.225 Tunnelled H.245) conformément à un second protocole standardisé,
le premier protocole étant un protocole propriétaire à l'aide duquel sont transmises des informations qui ne sont pas définies dans le second protocole,
la connexion de données utiles (RTP/RTCP) étant établie à l'aide d'informations échangées conformément au second protocole, au moins la seconde liaison de signalisation (H.225 Tunnelled H.245) étant déclenchée par le point terminal appelant (HFA A),
les informations des points terminaux (HFA A, HFA B), communiquées par le biais de la première liaison de signalisation et en parallèle par le biais de la seconde liaison de signalisation étant respectivement regroupées et
la connexion de données utiles (RTP/RTCP) étant établie directement entre les points terminaux (HFA A, HFA B) par le biais d'un réseau à commutation de paquets (LAN).

2. Procédé selon la revendication 1,
**caractérisé en ce que**
la connexion de données utiles (RTP/RTCP) est établie après que la liaison de signalisation est établie entre les points terminaux (HFA A, HFA B), mais avant que le point terminal appelé (HFA B) prenne l'appel.

3. Procédé selon l'une quelconque des revendications précédentes,
**caractérisé en ce que**
les informations regroupées sont traitées par la ou les instances de commutation (noeud 1, noeud 2) comme si elles avaient été communiquées par le biais d'une seule liaison de signalisation.

4. Procédé selon l'une quelconque des revendications précédentes,
**caractérisé en ce que**
dans des cas, dans lesquels entre les points terminaux (HFA A, HFA B) sont disposées plusieurs instances de commutation (noeud 1, noeud 2), les informations regroupées sont communiquées au sein d'une liaison de signalisation entre les instances de commutation (noeud 1, noeud 2).

5. Procédé selon l'une quelconque des revendications précédentes,
**caractérisé en ce que**
le second protocole est le protocole ITU-H.323 ou le protocole IETF-SIP.
